# EUROPEAN PATENT SPECIFICATION

(11) **EP 3 424 308 B1**
(45) Date of publication and mention of the grant of the patent: **29.12.2021**
(21) Application number: 18182045.7
(22) Date of filing: 05.07.2018
(51) Int. Cl.: A01K 13/00, A01J 7/04

(54) **TEAT DIP APPLICATION SYSTEM**
ZITZENTAUCHAPPLIKATIONSSYSTEM
SYSTÈME D'APPLICATION DE TREMPAGE DE TRAYON

(30) Priority: 05.07.2017 US 201715641387
(43) Date of publication of application: 09.01.2019
(73) Proprietor: Mirobot Ltd., 3653060 Kiryat Tivon (IL)
(72) Inventor: BAREKET, Tal, 3653060 Kiryat Tivon (IL)
(74) Representative: Jaeger, Michael David

(56) References cited:
- EP-A1- 0 277 396
- DE-U1- 29 623 762
- NL-C1- 1 022 394

## Description

### FIELD OF THE INVENTION

The present invention relates generally to preparation of dairy animals for milking, and particularly to a teat dip application system.

### BACKGROUND OF THE INVENTION

Milking machines are attached to dairy animals to withdraw and collect milk. A typical milking machine includes a teat cup with an interior liner. A dairy animal's teat is inserted into a top opening in the teat cup and liner for milking. With vacuum hoses connected to these components, a pulsation is created that withdraws milk from the dairy animal's teat. In addition to milking the animal, the vacuum also secures the teat cup and liner to the animal's teat during milking. When milking is completed, the vacuum is reduced so that the teat cup and liner can be detached from the animal.

To maintain healthy animals and reduce the incidence of harmful mastitis, teats are treated with antimicrobial cleaners and sealants known as teat dips. These teat dips can be applied before milking or after milking depending on their primary purpose. Dairy animal teat preparation is particularly important before milking to prevent dirt and debris from entering milk lines and contaminating milk. Teat preparation also stimulates teats to release oxytocin and to "let down" milk in advance of milking. Stimulation increases milk pressure in the udder so that milking is efficient and reasonably fast.

Teat preparation can also include a step of applying a teat sanitizer to a teat and rinsing the teat and liner to minimize the possibility of teat sanitizer entering the milk line. Teat preparation in prior systems takes place before a milker teat cup and liner are placed on the teat. To expedite milking in robotic milking machines, for example, teat preparation can take place in a teat cup liner, but teat sanitizers and dirt must be rinsed from the liner before milking so as not to contaminate milk.

Teat dip applicators have been used at the end of the milking process. Some machines apply dip to a cow's teat and possibly the lower portion of the udder just prior to detachment of the milking machine from the cow. Some teat dip applicators include brushes for brushing the teat in an effort to improve the cleaning process.

One prior art document, NL 1 022 394 C1, describes a device according to the preamble of claim 1 comprising a cup which is separate from the milking system and designed to receive a teat at one end. The cup also includes a spray nozzle for supplying a cleaning agent to its teat-receiving region.

Another prior art document, EP 0 277 396 A1, describes a method of cleaning a teat of a female animal which makes use of a cup provided with an opening for flushing washing and/or rinsing agent along said teat.

### SUMMARY OF THE INVENTION

The present invention seeks to provide an improved teat dip application system, as is described more in detail hereinbelow.

One of the advantages of the invention over the prior art is that the system of the invention provides more thorough, yet gentler, cleaning of the teats.

There is provided according to the invention, see claim 1, a teat dip application system including a teat cup having an opening for inserting therein a teat of a dairy animal, one or more teat dip inlet ports located on the teat cup, one or more inflatable teat holders and scrubbers located inside the teat cup, and one or more inflation ports in fluid communication with the one or more teat holders and scrubbers, wherein said one or more teat holders and scrubbers are placed completely below said one or more teat dip inlet ports.

In one non-limiting embodiment there is a plurality of said teat holders/scrubbers (20), and the plurality of teat holders/scrubbers (20) are comprised of a combination of teat holders/scrubbers (20) with different textures and the different textures provide different holding strengths, having different levels of coefficients of friction, on the teat and different cleansing and scrubbing patterns.

In one non-limiting embodiment the different textures comprise a multi-pointed texture, a multi-ribbed texture, or a multi-waved texture.

In one non-limiting embodiment at least one of the one or more teat dip inlet ports includes a nozzle faced inwards in the teat cup.

In one non-limiting embodiment the one or more teat holder/scrubbers include inflatable bladders.

In one non-limiting embodiment the teat cup includes a robotic arm interface member.

In one non-limiting embodiment the teat cup includes a drain port.

In one non-limiting embodiment the one or more teat holders/scrubbers are covered with a covering.

In one non-limiting embodiment the one or more teat holders/scrubbers include separate teat holders/scrubbers that extend between adjacent teat dip inlet ports.

In one non-limiting embodiment the one or more teat holders/scrubbers include discrete inflatable portions that extend between adjacent teat dip inlet ports.

### BRIEF DESCRIPTION OF THE DRAWINGS

The present invention will be understood and appreciated more fully from the following detailed description, taken in conjunction with the drawings in which:
Fig. 1 is a simplified pictorial illustration of a teat dip application system installed on teats of a dairy animal in a milking parlor, in accordance with a non-limiting embodiment of the present invention;
Figs. 2A and 2B are simplified pictorial and top view illustrations, respectively, of the teat dip application system, constructed and operative in accordance with a non-limiting embodiment of the present invention;
Fig. 3A is a simplified sectional illustration of the teat dip application system, taken along lines III-III in Fig. 2B, and showing different embodiments of inflatable teat holders/scrubbers;
Fig. 3B is a simplified sectional illustration of the teat dip application system, taken along lines III-III in Fig. 2B, and showing further embodiments of inflatable teat holders/scrubbers that have coverings or liners;
Figs. 4A, 4B and 4C are simplified top view, partially sectional illustrations of using the teat dip application system, respectively before applying teat dip on the teat, during application of teat dip on the teat, and after inflation of the inflatable teat holders/scrubbers, in accordance with a non-limiting embodiment of the present invention; and
Figs. 5A, 5B and 5C are simplified side view, partially sectional illustrations of using the teat dip application system, corresponding to Figs. 4A, 4B and 4C, respectively.

### DETAILED DESCRIPTION OF EMBODIMENTS

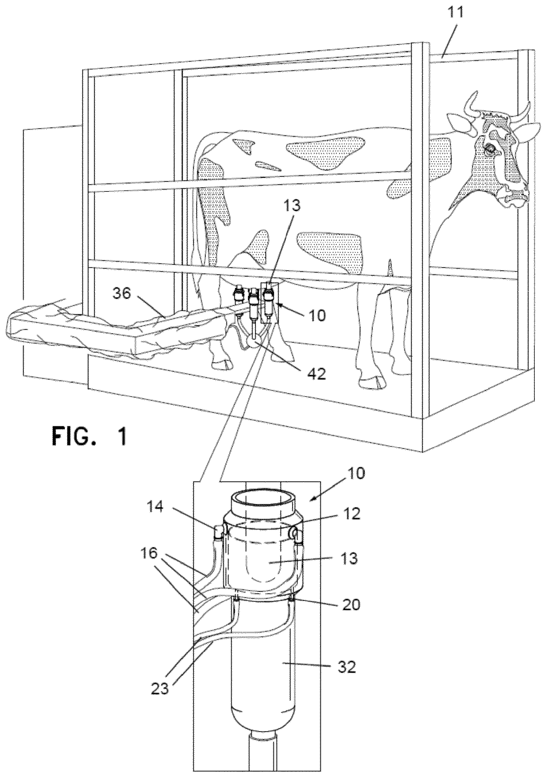

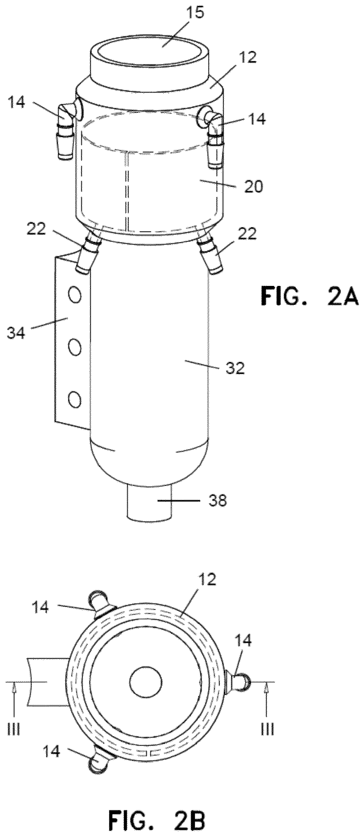

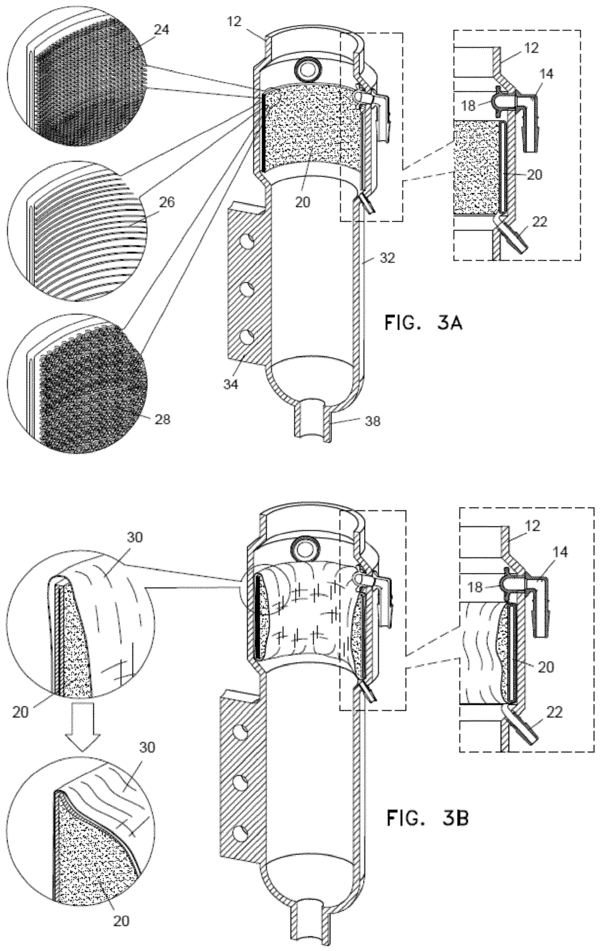

Reference is now made to Fig. 1, which illustrates a teat dip application system 10 installed on teats of a dairy animal in a milking parlor 11, and particularly to Figs. 2A, 2B and 3A, which illustrate a non-limiting construction of the teat dip application system 10.

Teat dip application system 10 includes a teat cup 12 for receiving therein a teat 13 (Fig. 1). Teat cup 12 has an opening 15 (Fig. 2A) for inserting therein the teat 13. One or more teat dip inlet ports 14 are provided on teat cup 12. In the illustrated embodiment, there are three teat dip inlet ports 14, spaced equally apart (120°), but the invention is not limited to this number of ports and the ports do not have to be equally spaced apart. As seen in the enlarged portion of Fig. 1, the teat dip inlet ports 14 may be connected to fluid lines 16, connected to a source of teat dip solution for cleaning and or sanitizing the teats.

As seen in Fig. 3A, each teat dip inlet port 14 may terminate in an internal nozzle 18 for spraying the teat dip on the teat. The nozzle 18 may be selected for a particular spray pattern, spray velocity, spray fluid flow rate, etc.

Teat cup 12 further includes one or more inflatable teat holders/scrubbers 20. In the illustrated embodiment, there is one teat holder/scrubber 20, but the invention can have more than one. Teat holder/scrubber 20 may be constructed of an inflatable bladder, made of an elastomeric material, such as natural rubber, synthetic rubber or other suitable materials. One or more inflation ports 22 are in fluid communication with teat holder/scrubber 20 and via fluid lines 23 (Fig. 1) with a fluid source (not shown), such as but not limited to, air, water, teat dip, saline solution, and the like, for inflating teat holder/scrubber 20. The teat holder/scrubber 20 may be deflated by releasing the pressure of the inflation fluid and draining the inflation fluid. A vacuum source (not shown) may be used to expedite the deflation.

As seen in Fig. 3A, the inner surface of the teat holders/scrubber 20 may have different textures, such as but not limited to, a multi-pointed texture 24, a multi-ribbed texture 26, or a multi-waved texture 28. The different textures provide different holding strengths (the textures have different levels of coefficients of friction) on the teat and different cleansing and scrubbing patterns. The teat cup 12 may include teat holders/scrubbers 20 with all the same texture, or a combination of teat holders/scrubbers 20 with different textures.

Teat cup 12 may include a lower portion 32 which may have a robotic arm interface member 34 (Figs. 2A and 3A) for attaching to a robotic arm 36 (Fig. 1). Teat cup 12 may include a drain port 38 (Figs. 2A and 3A) on lower portion 32. As seen in Fig. 1, robotic arm 36 may be provided with a drainage system 42 for collecting the used teat dip.

Fig. 3B illustrates another version, in which the teat holders/scrubber 20 is overlaid (covered) with a covering 30, such as but not limited to, cloth, smooth or roughened, membrane and the like. The covering 30 may be useful for sensitive teats or other applications. The covering 30 remains on the teat holders/scrubber 20 both before and after inflation, as seen in the left side illustrations in Fig. 3B.

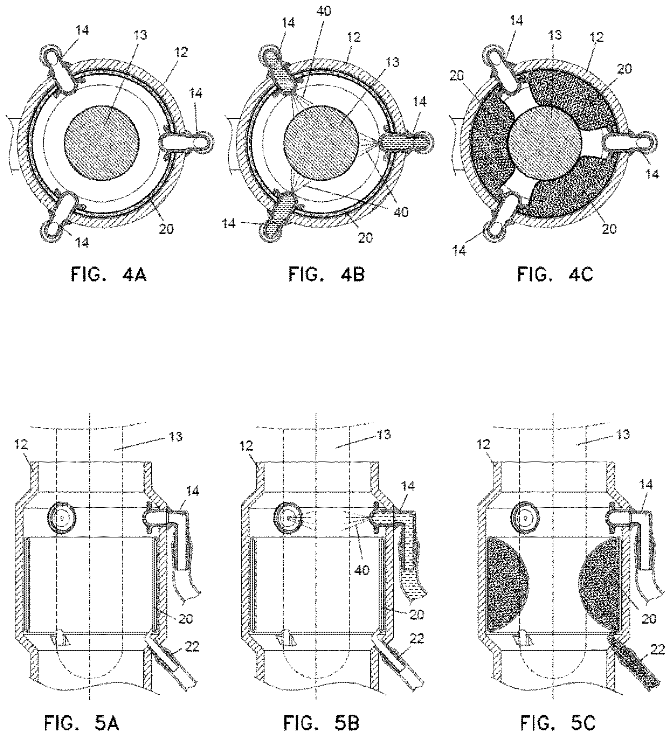

Reference is now made to Figs. 4A, 4B and 4C and Figs. 5A, 5B and 5C which illustrate a method of using the teat dip application system 10, in accordance with a non-limiting embodiment of the present invention.

In Figs. 4A and 5A, teat cup 12 has been fitted on teat 13. In Figs. 4B and 5B, teat dip 40 is introduced via teat dip inlet ports 14 and applied onto teat 13. In Figs. 4C and 5C, teat holders/scrubbers 20 are inflated against teat 13. The teat cup 12 may now be moved down (or up and down) over teat 13 to gently rub the teat dip over teat 13 to thoroughly cleanse teat 13.

It is noted in Fig. 4C, that separate teat holders/scrubbers 20 may be provided that extend between adjacent teat dip inlet ports 14. Alternatively, one teat holders/scrubber 20 may include discrete inflatable portions that extend between adjacent teat dip inlet ports 14. As another alternative, one teat holders/scrubber 20 may be placed completely below teat dip inlet ports 14 and completely cover the full circumference of the teat.

## Claims

1. A teat dip application system (10) comprising:
a teat cup (12) having an opening (15) for inserting therein a teat (13) of a dairy animal;
one or more teat dip inlet ports (14) located on said teat cup (12);
one or more inflatable teat holders and scrubbers (20) located inside said teat cup (12); and
one or more inflation ports (22) in fluid communication with said one or more teat holders and scrubbers (20), **characterized in that** said one or more teat holders and scrubbers (20) are placed completely below said one or more teat dip inlet ports (14).

2. The teat dip application system (10) according to claim 1, wherein there is a plurality of said teat holders and scrubbers (20), and the plurality of teat holders and scrubbers (20) are comprised of a combination of teat holders and scrubbers (20) and the inner surface of the teat holders and scrubbers have different textures and the different textures provide different holding strengths, having different levels of coefficients of friction, on the teat and different cleansing and scrubbing patterns.

3. The teat dip application system (10) according to claim 1, wherein there is a plurality of said teat holders and scrubbers (20), and the plurality of teat holders and scrubbers (20) are comprised of a combination of teat holders and scrubbers (20) and the inner surface of the teat holders and scrubbers have different textures and the different textures comprise a multi-pointed texture (24), a multi-ribbed texture (26), or a multi-waved texture (28).

4. The teat dip application system (10) according to claim 1, wherein at least one of said one or more teat dip inlet ports (14) comprises a nozzle (18) faced inwards in said teat cup (12).

5. The teat dip application system (10) according to claim 1, wherein said one or more teat holders and scrubbers (20) comprise inflatable bladders.

6. The teat dip application system (10) according to claim 1, wherein said teat cup (12) comprises a robotic arm interface member (34).

7. The teat dip application system (10) according to claim 1, wherein said teat cup (12) comprises a drain port (38).

8. The teat dip application system (10) according to claim 1, wherein said one or more teat holders and scrubbers (20) are covered with a covering.

9. The teat dip application system (10) according to claim 1, wherein said one or more teat holders and scrubbers (20) comprise separate teat holders and scrubbers (20) that extend between adjacent teat dip inlet ports (14).

10. The teat dip application system (10) according to claim 1, wherein said one or more teat holders and scrubbers (20) comprise discrete inflatable portions that extend between adjacent teat dip inlet ports (14).

## Patentansprüche

1. Zitzentunken-Applikationssystem (10), umfassend:
eine Zitzenkappe (12) mit einer Öffnung (15) zum Einführen einer Zitze (13) eines Milchtieres darin,
einen oder mehrere Zitzentunken-Einlassanschlüsse (14), die an der Zitzenkappe (12) angeordnet sind,
einen oder mehrere aufblasbare Zitzenhalter und -wäscher (20), die innerhalb der Zitzenkappe (12) angeordnet sind, und
einen oder mehrere Aufblasanschlüsse (22) in Fließverbindung mit dem einen oder den mehreren aufblasbaren Zitzenhaltern und -wäschern (20), **dadurch gekennzeichnet, dass** der eine oder die mehreren Zitzenhalter und -wäscher (20) vollständig unterhalb dem einen oder den mehreren Zitzentunken-Einlassanschlüssen (14) angebracht sind.

2. Zitzentunken-Applikationssystem (10) nach Anspruch 1, wobei es eine Vielzahl von den Zitzenhaltern und -wäschern (20) gibt und die Vielzahl von Zitzenhaltern und -wäschern (20) eine Kombination von Zitzenhaltern und -wäschern (20) umfasst und die innere Oberfläche der Zitzenhalter und -wäscher unterschiedliche Beschaffenheit aufweisen und die unterschiedlichen Beschaffenheiten unterschiedliche Haltestärken, mit unterschiedlichen Niveaus von Reibungskoeffizienten, an der Zitze und unterschiedliche Säuberungs- und Reinigungsmuster bereitstellen.

3. Zitzentunken-Applikationssystem (10) nach Anspruch 1, wobei es eine Vielzahl von den Zitzenhaltern und -wäschern (20) gibt und die Vielzahl von Zitzenhaltern und -wäschern (20) eine Kombination von Zitzenhaltern und -wäschern (20) umfasst und die innere Oberfläche der Zitzenhalter und -wäscher unterschiedliche Beschaffenheit aufweisen und die unterschiedlichen Beschaffenheiten eine Beschaffenheit mit vielen Spitzen (24), eine Beschaffenheit mit vielen Rippen (26) oder eine Beschaffenheit mit vielen Wellen (28) umfassen.

4. Zitzentunken-Applikationssystem (10) nach Anspruch 1, wobei wenigstens einer des einen oder der mehreren Zitzentunken-Einlassanschlüsse (14) eine Düse (18) umfasst, die nach innen in die Zitzenkappe (12) weist.

5. Zitzentunken-Applikationssystem (10) nach Anspruch 1, wobei der eine oder die mehreren Zitzenhalter und -wäscher (20) aufblasbare Blasen umfassen.

6. Zitzentunken-Applikationssystem (10) nach Anspruch 1, wobei die Zitzenkappe (12) ein Roboterarm-Kopplungselement (34) umfasst.

7. Zitzentunken-Applikationssystem (10) nach Anspruch 1, wobei die Zitzenkappe (12) eine Ablassöffnung (38) umfasst.

8. Zitzentunken-Applikationssystem (10) nach Anspruch 1, wobei der eine oder die mehreren Zitzenhalter und -wäscher (20) mit einer Abdeckung abgedeckt sind.

9. Zitzentunken-Applikationssystem (10) nach Anspruch 1, wobei der eine oder die mehreren Zitzenhalter und -wäscher (20) separate Zitzenhalter und -wäscher (20) umfassen, die sich zwischen benachbarten Zitzentunken-Einlassanschlüssen (14) erstrecken.

10. Zitzentunken-Applikationssystem (10) nach Anspruch 1, wobei der eine oder die mehreren Zitzenhalter und -wäscher (20) diskrete aufblasbare Abschnitte umfassen, die sich zwischen benachbarten Zitzentunken-Einlassanschlüssen (14) erstrecken.

## Revendications

1. Système d'application de bain de trayon (10) comprenant :
un gobelet trayeur (12) ayant une ouverture (15) pour insérer dedans un trayon (13) d'un animal donnant du lait ;
un ou plusieurs orifices d'entrée de bain de trayon (14) situés sur ledit gobelet trayeur (12) ;
un ou plusieurs supports et laveurs de trayon (20) gonflables situés à l'intérieur dudit gobelet trayeur (12) ;
et
un ou plusieurs orifice de gonflage (22) en communication fluide avec lesdits un ou plusieurs supports et laveurs de trayon (20), **caractérisé en ce que** lesdits un ou plusieurs supports et laveurs de trayon (20) sont placés complètement au-dessous desdits un ou plusieurs orifices d'entrée de bain de trayon (14).

2. Système d'application de bain de trayon (10) selon la revendication 1, dans lequel il y a une pluralité desdits supports et laveurs de trayon (20), et la pluralité de supports et laveurs de trayon (20) sont composés d'une combinaison de supports et laveurs de trayon (20) et la surface intérieure des supports et laveurs de trayon ont des textures différentes et les textures différentes fournissent différentes forces de maintien, ayant différents niveaux de coefficient de frottement, sur le trayon et différents motifs de nettoyage et de lavage.

3. Système d'application de bain de trayon (10) selon la revendication 1, dans lequel il y a une pluralité desdits supports et laveurs de trayon (20), et la pluralité de supports et laveurs de trayon (20) sont composés d'une combinaison de supports et laveurs de trayon (20) et la surface intérieure des supports et laveurs de trayon ont des textures différentes et les textures différentes comprennent une structure multipoints (24), une structure à nervures multiples (26), ou une texture à ondes multiples (28).

4. Système d'application de bain de trayon (10) selon la revendication 1, dans lequel au moins un desdits orifices d'entrée de bain de trayon (14) comprend une buse (18) dirigée vers l'intérieur dans ledit gobelet trayeur (12).

5. Système d'application de bain de trayon (10) selon la revendication 1, dans lequel lesdits un ou plusieurs supports et laveurs de trayon (20) comprennent des vessies gonflables.

6. Système d'application de bain de trayon (10) selon la revendication 1, dans lequel ledit gobelet trayeur (12) comprend un élément d'interface de bras robotique (34).

7. Système d'application de bain de trayon (10) selon la revendication 1, dans lequel ledit gobelet trayeur (12) comprend un orifice de drainage (38).

8. Système d'application de bain de trayon (10) selon la revendication 1, dans lequel lesdits un ou plusieurs supports et laveurs de trayon (20) sont couverts avec un élément couvrant.

9. Système d'application de bain de trayon (10) selon la revendication 1, dans lequel lesdits un ou plusieurs supports et laveurs de trayon (20) comprennent des supports et laveurs de trayon (20) séparés qui s'étendent entre des orifices d'entrée de bain de trayon (14) adjacents.

10. Système d'application de bain de trayon (10) selon la revendication 1, dans lequel lesdits un ou plusieurs supports et laveurs de trayon (20) comprennent des parties gonflables discrètes qui s'étendent entre des orifices d'entrée de bain de trayon (14) adjacents.
